# EUROPEAN PATENT SPECIFICATION

(11) **EP 2 762 586 B1**
(45) Date of publication and mention of the grant of the patent: **09.11.2016**
(21) Application number: 12835939.5
(22) Date of filing: 30.08.2012
(51) Int. Cl.: C22C 38/00, C22C 38/44, C22C 38/06, C22C 38/50, C22C 38/52, C22C 38/02, C22C 38/04, C22C 38/54, C23C 8/26, C21D 6/00, F16G 5/16

(54) **MARAGING STEEL**
MARTENSITAUSHÄRTENDER STAHL
ACIER MARAGING

(30) Priority: 30.09.2011 JP 2011217611
(43) Date of publication of application: 06.08.2014
(73) Proprietor: Hitachi Metals, Ltd., Tokyo 105-8614 (JP)
(72) Inventor: OHISHI, Katsuhiko, Yasugi-shi, Shimane 692-8601 (JP); UEHARA, Toshihiro, Yasugi-shi, Shimane 692-8601 (JP); KISHIGAMI, Ichiro, Yasugi-shi, Shimane 692-8601 (JP)
(74) Representative: Beetz & Partner mbB
(86) International application number: PCT/JP2012/072010
(87) International publication number: WO 2013/047078

(56) References cited:
- EP-A1- 1 176 224
- EP-A1- 1 291 445
- EP-A2- 1 111 080
- WO-A1-2010/110379
- JP-A- S60 153 321
- JP-A- 2000 345 302
- JP-A- 2001 240 943
- JP-A- 2001 240 944
- JP-A- 2002 275 585
- JP-A- 2002 275 585
- JP-A- 2008 185 183

## Description

### TECHNICAL FIELD

The present invention relates to maraging steel subjected to nitriding treatment that is preferable to a metal endless belt for a CVT (Continuously Variable Transmission).

### BACKGROUND ART

The maraging steel has a very high tensile strength of about 2000 MPa and thus is used for a metal endless belt for a CVT or the like, which requires a high strength, by being machined to a steel strip having a thickness of 0.5 mm or less.

The maraging steel typically has a chemical composition of 18% Ni, 8% Co, 5% Mo, 0.45% Ti, 0.1% Al, and the balance of Fe, by mass%.

However, the above-described maraging steel has not always a high fatigue strength, while it exhibits a very high tensile strength. The biggest factor of degrading the fatigue strength of the maraging steel is TiN inclusion. Since the TiN inclusion tends to be large in size and has a cubic shape, fatigue fracture originating from the inclusion tends to occur.

For this reason, there is proposed maraging steel to which Ti is not added. In the maraging steel subjected to the nitriding treatment for the metal endless belt, Ti is an important element for not only increasing the strength of a base (matrix) of alloy, but also increasing the strength of a nitrided layer. If Ti is not added, the strength of both base and nitrided layer would be reduced. Therefore, in the maraging steel to which Ti is not added, it is required to reinforce the base and the nitrided layer with an element other than Ti.

As a first method for reinforcing the base and the nitrided layer, there is a method of using Cr to reinforce the nitrided layer, while increasing the contents of Co and Mo which contribute to reinforce the base. The first method is disclosed in JP-A-2009-013464 (Patent Literature 1), JP-A-2008-088540 (Patent Literature 2), JP-A-2007-186780 (Patent Literature 3) and WO2009/008071 (Patent Literature 4) by the same applicant as the present invention, for example.

As a second method, there is a method of reducing Co, as well as Ti, and positively adding any one or more of Al, Si and Mn. This second method is disclosed in JP-A-2001-240943 (Patent Literature 5) and JP-A-2001-240944 (Patent Literature 6) by the same applicant as the present invention, for example. The above-described patent literatures propose maraging steel having a high fatigue strength, containing, by mass %, 0.008% or less of C, 2.0% or less of Si (including 0), 3.0% or less of Mn (including 0), 0.010% or less of P, 0.005% or less of S, 12 to 22% ofNi, 3.0 to 7.0% of Mo, less than 7.0% of Co, 0.1% or less of Ti, 2.0% or less of Al, 8.0 to 13.0% of 3Si+1.8Mn+Co/3+Mo+2.6Ti+4Al, less than 0.005% of N, 0.003% or less of O, and the balance being substantially Fe, and further containing, as optional elements, 4.0% or less of Cr, 0.01% or less of B, 1.0% or less of Nb, 2.0% or less of Ta and 2.0% or less of W.

### CITATION LIST

### PATENT LITERATURE

Patent Literature 1: JP-A-2009-013464, Patent Literature 2: JP-A-2008-088540, Patent Literature 3: JP-A-2007-186780, Patent Literature 4: WO2009/008071, Patent Literature 5: JP-A-2001-240943, Patent Literature 6: JP-A-2001-240944

EP1111080 discloses a maraging steel. consisting essentially, by mass, of not more than 0.008% C, from 0 inclusive but not more than 2.0% Si, from 0 inclusive but not more than 3.0% Mn, not more than 0.010% P, not more than 0.005% S, 12 to 22% Ni, 3.0 to 7.0% Mo, less than 7.0% Co, not more than 0.1% Ti, not more than 2.0% AI, less than 0.005% N, not more than 0.003% 0 (oxygen), and the balance substantially Fe, a total amount of (3Si + 1.8Mn + Co/3 + Mo + 2.6Ti + 4A1) being in a range of 8.0 to 13.0%.

### SUMMARY OF INVENTION

### TECHNICAL PROBLEM

The maraging steel according to the above-described Patent Literatures 1 to 4 contain expensive Co in the range of more than 7.0%. Co is a rare metal, and it is feared that the price of Co raw material is raised in the future.

Meanwhile, in the maraging steel described in the Patent Literatures 5 and 6, the contents of both Ti and N are kept as low as possible for the purpose of reducing TiN inclusions that are adverse to improvement in fatigue strength. Further, in order to make the maraging steel less expensive, the content of Co is set to less than 7.0% and the additional elements are added by appropriate amounts. As a result, both high strength and high fatigue strength can be achieved at low price.

However, in applications such as a metal endless belt for a CVT and the like, it is required to stably achieve an excellent strength, in particular, by maximizing the effect of precipitation enhancement by nitride formation after a nitriding process. The strength of the conventional maraging steel according to the above-described second method does not necessarily satisfy such a high demand, and therefore, it is required to achieve more excellent fatigue strength and stably high strength.

An object of the present invention is to provide maraging steel subjected to nitriding treatment, having an excellent fatigue strength and stably providing a high strength.

This object is accomplished by the features of claim 1.

### SOLUTION TO PROBLEM

The present inventors have studied an optimal composition which maximizes precipitation enhancement by nitride formation after the nitriding treatment and stably provides an excellent strength, based on the maraging steel described in the Patent Literatures 5 and 6. As a result, it has been found that Si and Mn, which have been conventionally added for the purpose of improvement in strength, should be advantageously reduced in order to ensure good toughness and ductility.

Moreover, the present inventors have found, from their renewed inspection of the effect of Al which contributes to improvement in strength, that high strength and fatigue strength characteristics can be obtained by regulating the Al content to be in a specific range and accordingly optimizing the composition of the steel and regulating the hardness. Eventually, the inventors have reached to the present invention.

That is, the present invention provides maraging steel subjected to nitriding treatment, consisting of 0.008% or less of C, 0.5% or less of Si, 0.5% or less of Mn, 0.5 to 1.5% of Cr, 16.0 to 22.0% of Ni, 3.0 to 7.0% of Co, 3.0 to 7.0% of Mo 0.6 to 1.3% of Al optionally 0.0001 to 0.0030% of Mg, optionally 0.0001 to 0.0030% of Ca, optionally 0.0001 to 0.0030% of B by mass% and having the shape of a steel strip of a thickness of 0.5 mm or less, wherein the balance consists of Fe and impurities, the impurities being restricted to 0.01 % or less of Ti, 0.01 % or less of Nb, 0.01% or less of Ta, and 0.01% or less of W, 0.05% or less of P, 0.05% or less of S, 0.005% or less of N, 0.003% or less of O, wherein a ratio of Al to Ti satisfies Al/Ti≥250, and a surface hardness of the maraging steel is 800 to 1,050 HV and an internal hardness of the maraging steel is 570 HV or less by Vickers hardness.

The above-described Al content is preferably 0.7 to 1.2% by mass%.

Further, the present invention may contain , either 0.0001 to 0.0030% of Mg or 0.0001 to 0.0030% of Ca, or both by mass%. Further, the present invention is the maraging steel which may contain, 0.0001 to 0.0030% of B by mass%.

### ADVANTAGE EFFECTS OF INVENTION

The maraging steel according to the present invention achieves a suitable sensitivity to a surface defect of the maraging steel after nitriding treatment and provides high strength and fatigue strength characteristics by optimizing Al content and accordingly optimizing the composition of the maraging steel and regulating the hardness.

Therefore, the maraging steel according to the present invention has very excellent mechanical properties, such as long fatigue life or the like when it is used for a member which requires a high fatigue strength such as a metal endless belt for a CVT.

### BRIEF DESCRIPTION OF DRAWING

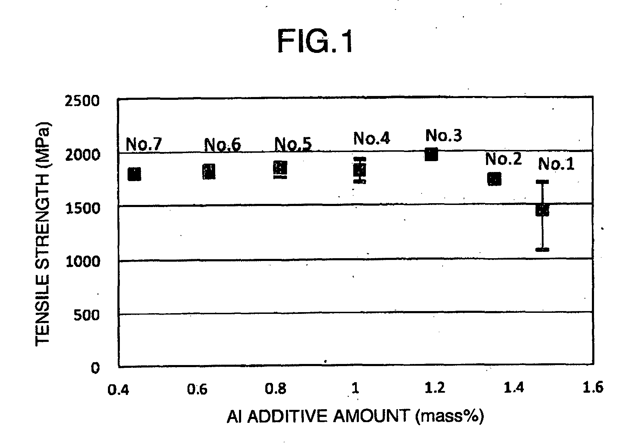

[Fig. 1] Fig. 1 is a view showing the relationship between Al content and tensile strength.

### DESCRIPTION OF EMBODIMENTS

As described above, the characteristics of the present invention are made in view of the above-described novel finding. The action of Al, which is the most important element in the present invention, will now be described. Note that the content of elements is indicated by mass%.

### Al: 0.6% to 1.3%

Al is the most important element in the present invention and it has been found from a variety of experiments that it is required to limit the Al content within a suitable range in order to obtain high strength and high fatigue strength. In the maraging steel containing reduced Ti or the like according to the present invention, Al combines with Ni to form NiAl and Ni₃Al, which are intermetallic compounds necessary to obtain sufficient internal hardness. Therefore, Al has an effect of increasing the strength of a base. Al is also advantageous for improvement in fatigue strength, because AlN precipitated in a melting and solidification process is finer than TiN, when compared to common maraging steel containing Ti. Further, Al is an important element capable of forming fine AlN in order to obtain the hardness of the nitrided layer in the nitriding treatment.

However, if the Al content is high, the amount of the intermetallic compounds becomes excessively high to cause increase in internal hardness, while the amount of the fine AlN becomes also excessively high after the nitriding treatment to raise the surface hardness too high. It has been found that this fact results in higher sensitivity to an internal defect or a surface defect in the steel, which causes decrease in strength or fatigue strength and leads to variations in strength.

In the present invention, the upper limit of the Al content is thus limited to 1.3% or less. If the Al content is 1.3% or less, it is possible to obtain high strength and high fatigue strength because the amount of the intermetallic compounds and the nitride remain within a suitable range. It is more preferable that the upper limit of the Al content is set to 1.25% in order to more reliably reduce variations in strength. The more preferable upper limit is 1.2% and the further more preferable upper limit is 1.15%.

Meanwhile, if the Al content is low, the amounts of the intermetallic compounds and the nitride as described above are too low to obtain sufficient internal strength and surface hardness after the nitriding treatment. For this reason, the lower limit of the Al content is set to 0.6% or more. The more preferable lower limit of the Al content is 0.7% and the further more preferable lower limit of the Al content is 0.8%.

Furthermore, in the present invention, it has been found that, besides Ti as described hereinafter, Ta, W and Nb disclosed in the maraging steel described in the Patent Literatures 5 and 6 are also elements whose level should be limited to be equal to or less than that of impurity elements, in order to maximize the above-described effect of Al. These elements easily combine with C, N, Ni and the like and form a compound to cause decrease in toughness or variations in strength. The reason will be described hereinafter.

The ratio of Al to Ti is Al/Ti≥250

Next, the ratio of Al to Ti for maximizing the above-described effect of Al will be described.

As described hereinafter, Ti is an impurity element which is to be restricted in the present invention. Ti is a very active element and therefore easily combines with N in a melting production to form TiN which is a non-metallic inclusion, so that the fatigue strength in the high cycle range is decreased. Further, in the maraging steel containing 0.6% to 1.3% of Al according to the present invention, if impurity Ti remains excessively, Ni₃Ti which is an intermetallic compound containing Ti is formed in heat treatment, so that formation of Ni₃Al which is the intermetallic compound containing Al and is to be otherwise formed is inhibited. Further, since Ti nitrides are preferentially formed in the nitrided layer in the nitriding treatment, fine AlN, which is to be otherwise formed, is not sufficiently formed in the nitrided layer. As a result, high strength and high fatigue strength can not be obtained. Thus, in the present invention, the ratio of Al toTi (Al/Ti) is maintained to 250 or more by mass%. If the ratio ofAl to Ti (Al/Ti) is less than 250, the above-described effect of the impurity Ti reaches the nitrided layer to inhibit formation of AlN in the nitrided layer so that the effect of Al can not be maximized.

A more preferable range of the ratio of Al to Ti is 300 or more, by mass%. The ratio is more preferably 350 or more, and further more preferably 400 or more.

### Ti: 0.01% or less

Next, Ti will be described. Ti is originally an important element for reinforcement of the maraging steel, but forms TiN in the above-described nitrided layer, as well as TiN or Ti(C, N) as inclusions. Therefore, Ti is a detrimental element which decreases fatigue strength, in particular, in a very high cycle range. For this reason, in the present invention, it is required to keep the Ti content as low as possible as an impurity. Further, Ti tends to form a thin and stable oxide film on the surface. When formed, this oxide film inhibits the nitriding reaction and therefore it is difficult to obtain sufficient compressive residual stress in the nitrided surface. In order to facilitate the nitriding and increase the compressive residual stress of the surface after the nitriding, it is required to keep the Ti content as low as possible. If the Ti content is more than 0.01 %, sufficient effect can not be realized for decreasing TiN or Ti(C, N) and the stable oxide film is likely formed on the surface. Therefore, the Ti content is restricted to 0.01% or less. More preferably, the content is 0.008% or less.

### Nb: 0.01% or less

When Nb is exposed to a high temperature equal to or higher than 800°C such as a solid solution heat treatment temperature, Nb forms δ(Ni₃Nb), which is a stable phase, possibly to cause decrease in strength and larger variations in strength. Therefore, the Nb content is restricted to 0.01% or less.

### Ta: 0.01% or less

Ta is an element which forms fine compounds with B, C or N to make prior austenite grain size finer in solid solution treatment after cold machining, which contributes to reinforcement. Further, Ta is expected to have an effect of inhibiting skin roughness while decreasing toughness. Therefore, the Ta content is restricted to 0.01% or less.

### W: 0.01% or less

In the same matter as Ta, W forms compounds and causes decrease in toughness. Therefore, the W content is restricted to 0.01 % or less.

Next, the hardness defined in the present invention will be described.

Surface hardness of the maraging steel is 800 to 1,050 HV by Vickers hardness

In the present invention, the term "surface hardness of the maraging steel" means the hardness generated by the nitride in the nitriding treatment near the surface of the maraging steel.

In the maraging steel containing Al in the range of 0.6% to 1.3% according to the present invention, it has been observed that if the surface hardness of the maraging steel is unnecessarily high after the nitriding treatment, the sensitivity to a surface defect is increased to cause decrease in strength and fatigue strength.

Generally, when the material having Al or Cr added therein as in the present invention is subjected to the nitriding, nitrides are precipitated in the proximity of the surface. Owing to hardening associated with the precipitation or volume changes associated with the precipitation of the nitride, a residual stress is generated to increase the strength and fatigue strength. In particular, the surface hardness significantly affects the strength and fatigue strength. In a material having no defect, the strength and fatigue strength increase as the hardness increases.

However, industrially produced steels or their products have more or less defects. Therefore, higher hardness conversely causes decrease in strength and fatigue strength. In particular, the surface hardness is correlated to the sensitivity to a surface defect having a size of several μm, which are inevitably generated during production. As the surface hardness increases, the sensitivity to the surface defect increases. Therefore, the surface hardness of the maraging steel according to the present invention is set to 1050 HV or less by Vickers hardness. Meanwhile, if the surface hardness is less than 800 HV, it is difficult to use the maraging steel for a metal endless belt for a CVT or the like, which requires a wear resistance. Therefore, the lower limit of the surface hardness is set to 800 HV.

Internal hardness of the maraging steel is 570 HV or less by Vickers hardness

In the present invention, the term "internal hardness of the maraging steel" means the hardness at a position apart from the surface of the maraging steel by such an extent that the position is not subject to the influence of the nitriding treatment on the above-described surface.

The internal hardness of the maraging steel is generally regulated to be about 570 HV in order to obtain sufficient strength and fatigue strength. However, in the maraging steel with no Ti according to the present invention, the internal hardness is obtained as a result of the precipitation of the intermetallic compounds of Al, such, as NiAl or Ni₃Al. These intermetallic compounds, such as NiAl, significantly contribute to increase the strength. However, as the precipitation amount increases, the hardness becomes higher to increase the sensitivity to the internal defect, similar to the above-described sensitivity to the surface defect. This results in increase in the sensitivity to an internal damage originating from the inclusions, which occur in the very high cycle range where the repetition number in the fatigue test is 10⁷ or more. Therefore, the internal hardness of the maraging steel according to the present invention is set to 570 HV or less by Vickers hardness. Meanwhile, the lower limit is not particularly limited. However, the lower limit is preferably 490 HV since the strength is decreased if the internal hardness is less than 490 HV. A more preferable lower limit of the internal hardness is 500 HV

The effect of each element other than the above-described elements in the present invention will now be described.

### C: 0.008% or less

C forms carbides with Mo to reduce the intermetallic compounds to be precipitated and decrease the strength. It is therefore required to keep the C content as low as possible. Further, if C is excessively added, the risk of reducing weldability is high. The weldability is required when the maraging steel is used for the metal endless belt for a CVT, for example. For this reason, the C content is set to 0.008% or less. A more preferable upper limit of the C content is 0.006% and a further preferable upper limit is 0.005%.

### Si: 0.5% or less

Si is an element which can compensate the decreased amount of the strength due to reduction of Ti, by making intermetallic compounds precipitated in aging treatment finer or by forming intermetallic compounds with Ni. However, in order to ensure good toughness and ductility, it is advantageous to keep the Si content as low as possible. Therefore, in the present invention, the Si content is set to 0.5% or less. A more preferable range for more reliably ensuring sufficient toughness and ductility is 0.1% or less. More preferably, the range is 0.05% or less.

### Mn: 0.5% or less

Mn forms intermetallic compounds with Ni in the aging treatment to contribute to the age hardening. Therefore, Mn is an element which can compensate the decreased amount of the strength due to reduction of Ti. However, in order to ensure good toughness and ductility, it is advantageous to keep the Mn content as low as possible. Therefore, in the present invention, the Mn content is set to 0.5% or less. A more preferable range for more reliably ensuring sufficient toughness and ductility is 0.1% or less. More preferably, the range is 0.05% or less.

### Cr: 0.5 to 1.5%

Cr is an element having a high affinity to N in performing the nitriding and reduces the nitriding depth to increase the nitriding hardness and increase the compressive residual stress on the nitrided surface. Therefore, Cr is added as an essential element. However, if the Cr content is less than 0.5%, its effect is not significant. Meanwhile, even if Cr is added in an amount of more than 1.5%, its effect is not remarkably enhanced, while the strength after the nitriding treatment is decreased. Therefore, the Cr content is set to 0.5 to 1.5%. A more preferable range of the Cr content is 0.8 to 1.2%.

### Ni: 16.0 to 22.0%

Ni has an effect of stably forming a low-C martensitic structure which is a base structure of the maraging steel, and an effect of forming intermetallic compounds with Al to contribute to improve the strength. Therefore, at least 16.0% of Ni is necessary. However, if the Ni content is more than 22.0%, an austenitic structure is stabilized and the martensitic transformation tends not to occur. Therefore, Ni is set to 16.0 to 22.0%. A more preferable range of Ni is more than 18.0% and equal to or less than 21.0%.

### Co: 3.0 to 7.0%

Co is an important element for promoting precipitation of the fine intermetallic compounds containing Mo and Al and contributing to enhancement of the aging precipitation, by increasing the solid solubility of elements forming the aging precipitation such as Mo and Al at the solid solution treatment temperature, while decreasing the solid solubility of Mo, Al in the aging precipitation temperature range, without significantly affecting the stability of the martensitic structure in the matrix. Therefore, it is required to add a large amount of Co in terms of the strength and toughness. If Co is less than 3.0%, it is difficult to obtain sufficient strength in the maraging steel containing reduced Si, Mn and Ti. Meanwhile, if Co is added in an amount of more than 7.0%, the strength is conversely reduced due to increase in sensitivity to the surface defects associated with increase in hardness. Therefore, Co content is set to 3.0 to 7.0%. A more preferable range of Co is more than 4.0% and equal to or less than 6.0%.

### Mo: 3.0 to 7.0%

Mo is an important element which forms fine intermetallic compounds such as Ni₃Mo and Fe₂Mo in the aging treatment and contributes to enhancement of the precipitation. In addition, Mo is an element effective for increasing the surface hardness and the compressive residual stress by the nitriding. If Mo is less than 3.0%, the tensile strength is insufficient for this purpose. On the other hand, if Mo is more than 7.0%, Mo tends to form coarse intermetallic compounds containing Fe and Mo as main elements. Therefore, Mo is set to 3.0 to 7.0%. A more preferable range of Mo is more than 4.0% and equal to or less than 6.0%.

So far, the elements defined as essential elements in the present invention have been described. Next, elements which may be optionally added will be described.

### Mg: 0.0001 to 0.0030%, Ca: 0.0001 to 0.0030%

In the present invention, 0.0001 to 0.0030% of Mg and 0.0001 to 0.0030% of Ca may be contained by mass%.

From the maraging steel according to the present invention, ingots can be produced by a melting process in a vacuum environment, such as vacuum induction melting, or vacuum induction melting followed by vacuum arc remelting or electroslag remelting. However, even though such melting in the vacuum environment is performed, it is technically difficult to completely eliminate inclusions.

In the case of the present invention, since Al is added for the purpose of improvement in strength, there are a risk of formation of rough, large and hard Al₂O₃ inclusion having a size of more than 25 µm, for example, and a risk of clustering of Al₂O₃. The Al₂O₃ inclusion is hard and has a high melting point so that it is hardly transformed even during a hot plastic processing, for example. Therefore, the Al₂O₃ inclusions can produce a flaw on a roll in cold rolling, for example, to generate the surface defect in the maraging steel. It is thus preferable that the Al₂O₃ inclusion is combined with other oxides to form composite inclusions so as to reduce the hardness or reduce the melting point. Further, at the same time, elements which can prevent clustering are preferably added in order to prevent inclusion defects.

Si, Mn, Ca and Mg are raised as elements effective for combining the Al₂O₃ inclusions into the composite inclusions. However, in the present invention, additive amounts of Si and Mn are restricted because they are elements which cause decrease in toughness and ductility. Therefore, either Ca or Mg, or both thereof other than Si and Mn are preferably added to combine the Al₂O₃ inclusions into the composite inclusions. Further, Ca and Mg have an effect of preventing the clustering of the Al₂O₃ inclusions. Therefore, in the present invention, it is predetermined to contain 0.003% or less of Ca or additionally 0.003% or less of Mg.

Here, in order to reliably obtain the effect of Ca and Mg, it is preferable that the lower limit of the Ca content is 0.0001% and the lower limit of the Mg content is 0.0001%. Moreover, Mg is expected to have an effect of making oxide inclusions and nitride inclusions finer. Therefore, Mg is preferably selected when the maraging steel according to the present invention is applied to the metal endless belt for a CVT, wherein it is required to prevent fatigue fracture originating from the inclusions, for example. Of course, both Mg and Ca may be jointly added.

### B: 0.0001 to 0.0030%

B is an element which contributes to reinforcement by making the prior austenite crystal grains finer in performing the solid solution treatment after the cold processing, and B has also an effect of inhibiting the surface skin roughness. So, B may be added as required. The B content is set to 0.0030% or less because the toughness is decreased if the B content is more than 0.01%. More preferably, the content is 0.001% or less. A preferable lower limit of the B content is 0.0001%, above which it is possible to reliably make the prior austenite crystal grains finer.

Furthermore, elements other than the above-described elements are Fe and impurities.

Although it is preferable that the contents of impurities are lower, it is no problem when the contents are within the following range.

### P≤0.05%, S≤0.05%, N≤0.005%, O≤0.003%

The maraging steel according to the present invention contains substantially no Ti forming the stable oxide film, which may inhibit the nitriding, on the surface. Therefore, a variety of nitriding treatment such as normal gas nitriding, gas soft nitriding, nitrosulphurizing, ion nitriding, salt bath nitriding or the like can be easily performed.

For example, if the maraging steel is machined to have a thickness equal to or less than 0.5 mm and is used for the metal endless belt for a CVT, an absolute value of the compressive residual stress of the nitrided layer, which tends to decrease in the maraging steel having a composition without Ti, can be increased by means of Cr or Al having an effect of increasing the nitriding hardness and the absolute value of the compressive residual stress of the nitrided layer.

The maraging steel according to the present invention is expedient to the metal endless belt for a CVT, because it has a high tensile strength, a high fatigue strength and excellent fatigue characteristics owing to the nitriding treatment.

### EXAMPLES

The present invention will be described in more detail in the following examples.

Seven kinds of steel blocks, each having a weight of 10 kg, were created using a vacuum induction melting furnace. In order to reliably prevent incorporation of Ti, Nb, Ta and W that are elements to be restricted, alloy raw materials having a high purity were employed and added.

The created steel blocks were subjected to homogenizing anneal followed by hot forging. Then, the steel blocks were subjected to hot-rolling and cold-rolling to create the maraging steel having a thickness of about 0.2 mm for a metal endless belt for a CVT.

Chemical compositions of the resulting maraging steels and Al/Ti ratios are shown in Table 1. Every maraging steels were regulated to have 0.008% or less of C, in order to prevent decrease in weldability. It should be noted that the maraging steels of Nos. 1, 2 and 7 have an Al content out of the range in the present invention and, in particular, No. 7 has also an Al/Ti ratio out of the range in the present invention.

Further, as impurities not shown in Table 1, 0.002% or less of P and 0.001% of S were present in each of the maraging steels.

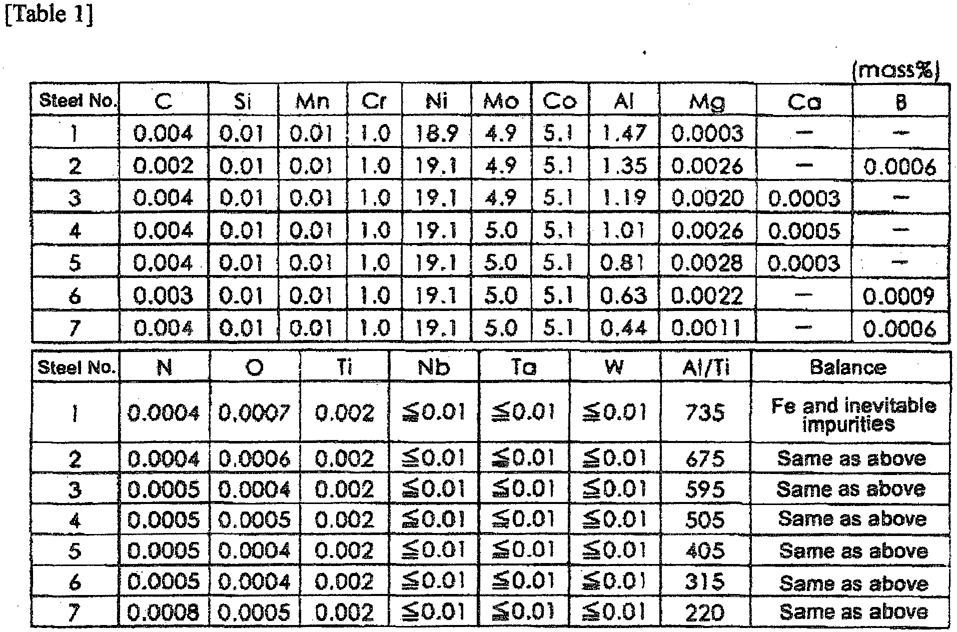

The maraging steels shown in Table 1 were subjected to solid solution treatment at a temperature of 900°C in a hydrogen environment and then aging treatment at a temperature of 480°C, followed by gas nitriding treatment in a temperature range of 450 to 500°C as nitriding treatment. Here, in the gas nitriding treatment, three levels of surface hardness of the maraging steels were provided to determine the effects of the Al content and the surface hardness.

From the maraging steels after the nitriding treatment, test pieces for internal hardness measurement, surface hardness measurement, tensile test and fatigue strength measurement were sampled and the tests were performed. For the internal hardness measurement, the test pieces were sampled from the center in the width direction of the maraging steels and cut planes of the test pieces were polished. An indentation is applied on the center in the thickness direction of the test pieces to measure Vickers hardness. For the surface hardness measurement, an indentation is applied on the surface of the center in the width direction of the maraging steel to measure Vickers hardness.

The results of the internal hardness, the surface hardness, the tensile strength and the fatigue test after the nitriding treatment are shown in Table 2. Although there are a variety of types of stress loading in the fatigue test, such as rotary bending, tensile and compression, twisting and the like, an evaluation method of applying bending stress is suitable for the maraging steel according to the present invention because it is a strip material. Therefore, in a cyclic bending fatigue test, repetition numbers until breakage were counted with cyclic bending stresses applied with an average stress of 679 MPa and a maximum stress of 1300 MPa. The levels of the average stress and the maximum stress were set so as to make a clear difference between the maraging steels. If the average stress is less than 679 MPa or the maximum stress is less than 1300 MPa, it is difficult to break the maraging steels. On the other hand, if the average stress is more than 679 MPa or the maximum stress is more than 1300 MPa, the maraging steels are prematurely broken so that a fatigue limit, that is an index of fatigue characteristics, is not clear. For this reason, the stress levels of the repetition bending test were set to the average stress of 679 MPa and the maximal stress of 1300 MPa.

Further, the cut planes of the maraging steels of No. 1 to No. 6 were observed with an electron microscope in 10 fields of view and with a magnitude of 1,000. The Al₂O₃ inclusion was not observed.

**[Table 2]**

| Steel No. | Al content (mass%) | Internal hardness (HV) | Surface hardness (HV) | Tensile strength (MPa) | Breakage repetition number (counts) | Remarks |
|---|---|---|---|---|---|---|
| 1 | 1.47 | 589 | 1062 | 1447 | 29200 | Comparative example |
| | | 577 | 931 | 1494 | 75233 | Comparative example |
| | | 569 | 804 | 1460 | 104300 | Comparative example |
| 2 | 1.35 | 581 | 1100 | 1657 | 9933 | Comparative example |
| | | 570 | 1092 | 1636 | 22633 | Comparative example |
| | | 573 | 1038 | 1747 | 21700 | Comparative example |
| 3 | 1.19 | 544 | 1061 | 1552 | 44933 | Comparative example |
| | | 551 | 1011 | 1636 | 126767 | Present invention |
| | | 541 | 941 | 1977 | 914833 | Present invention |
| 4 | 1.01 | 538 | 1033 | 1444 | 38700 | Present invention |
| | | 557 | 1004 | 1756 | 65167 | |
| | | 523 | 933 | 1836 | 957700 | Present invention |
| 5 | 0.81 | 508 | 1037 | 1444 | 68433 | Present invention |
| | | 504 | 992 | 1756 | 316000 | Present invention |
| | | 504 | 903 | 1836 | 1958800 | Present invention |
| 6 | 0.63 | 503 | 998 | 1439 | 248433 | Present Invention |
| | | 494 | 986 | 1606 | 265400 | Present invention |
| | | 491 | 861 | 1860 | 276700 | Present invention |
| 7 | 0.44 | 472 | 1030 | 1512 | 175267 | Comparative example |
| | | 484 | 998 | 1757 | 283900 | Comparative example |
| | | 480 | 836 | 1812 | 745633 | Comparative example |

The results of the internal hardness, the surface hardness, the tensile strength, the breakage repetition number in the fatigue test of the maraging steels according to the present invention and comparative examples show that the tensile strength and the breakage repetition number are changed depending on the surface hardness and the internal hardness in the maraging steels according to the present invention. In particular, it is found that the tensile strength and the breakage repetition number increase as the surface hardness is reduced.

However, in the maraging steel of No. 3 having the Al content close to the upper limit predetermined in the present invention, an only slight increase in the surface hardness leads to increase in the sensitivity to a steel surface defect and consequently the breakage repetition number is as small as 44933.

Further, in the maraging steels of No. 3 to No. 6 according to the present invention, the breakage repetition numbers are high. Moreover, the hardness is changed depending on the Al content. In particular, the maraging steels of No. 3 to No. 5 according to the present invention show optimal results of the internal hardness of 500 to 570 HV The maraging steel of No. 6 according to the present invention has the Al content close to the lower limit in the present invention. Thus, its internal hardness is relatively low.

Meanwhile, it is found that in the comparative example of No. 1 having a high Al content, the tensile strength and the breakage repetition number are reduced when the internal hardness is as high as 589 HV and surface hardness is as high as 1062 HV, for example. Moreover, the steel in the comparative example of No. 7 has a small Al content and therefore the amount of the intermetallic compounds increasing the internal hardness is small. As a result, the internal hardness is as low as 490 HV or less in each case, which may represent a problem when this maraging steel is applied to members that are required to have sufficient hardness, such as a power transmission metal belt. From the foregoing, it is found that the characteristics are significantly changed depending on the Al content and there is a suitable range of the Al content.

The comparative example of No. 7 has a low Al/Ti ratio of 150 and formation of AlN was hardly observed when observing the nitrided layer with a transmission electron microscope. Therefore, the comparative example of No. 7 had a low breakage repetition number in the fatigue test.

Next, in order to further confirm the effect of Al, the tensile test was performed after the nitriding treatment of the same batch in nitriding treatment condition aiming to a surface hardness of 850 HV. The results are shown in Fig. 1. Fig. 1 is a view showing the results of the tensile test of three samples for each maraging steel. Black squares designate average values and vertical lines designate variations in measured values.

As can be seen from the maraging steel of No. 1 containing more than 1.3% of Al in Fig. 1, variations in tensile strength are salient even if hardness is regulated. As the Al content is increased, formation of the intermetallic compounds is promoted in the aging treatment to cause increase in hardness. As a result, the increased Al content is believed to be a cause of variations in tensile strength and fatigue strength characteristics. Further, it is found that variations can also be suppressed with an Al additive amount predetermined in the present invention.

Moreover, Fig. 1 shows that if Al is added in an amount of more than 1.2%, variations in strength are increased and the tensile strength is decreased. On the other hand, it is found from the results in Table 2 that, when the Al content was in the range of 0.7 to 1.2% and a suitable nitriding condition was achieved (for example, the surface hardness of 900 to 950 HV), the breakage repetition number of more than 950,000 was obtained so that the sensitivity to the steel surface defects was regulated to be suitable and an excellent fatigue strength was obtained.

In terms of tensile strength, variations in strength and fatigue strength, the maraging steel having particularly excellent characteristics can be obtained by regulating the Al content to be in the range of 0.7 to 1.2%.

As described above, it is found that high strength, high fatigue strength characteristics and stable strength characteristics with small variations can be obtained by setting suitable levels of internal hardness and surface hardness by the aging treatment and the nitriding treatment, while optimizing the composition.

### INDUSTRIAL APPLICABILITY

The maraging steel according to the present invention is expedient to a metal endless belt for a CVT because it has a high strength and an excellent fatigue strength.

## Claims

1. Maraging steel subjected to nitriding treatment, the maraging steel consisting of
• 0.008% or less of C,
• 0.5% or less of Si,
• 0.5% or less of Mn,
• 0.5 to 1.5% of Cr,
• 16.0 to 22.0% of Ni,
• 3.0 to 7.0% of Co,
• 3.0 to 7.0% of Mo,
• 0.6 to 1.3% of Al,
• optionally 0.0001 to 0.0030% of Mg,
• optionally 0.0001 to 0.0030% of Ca,
• optionally 0.0001 to 0.0030% of B,
by mass% and
having the shape of a steel strip of a thickness of 0.5 mm or less, wherein
the balance consists of Fe and impurities,
the impurities are restricted to
• 0.01% or less of Ti,
• 0.01% or less of Nb,
• 0.01% or less of Ta, and
• 0.01% or less of W,
• 0,05% or less of P,
• 0,05% or less of S,
• 0,005% or less of N,
• 0,003% or less of O,
wherein a ratio of Al to Ti satisfies Al/Ti≥250, and
a surface hardness of the maraging steel is 800 to 1,050 HV
and
an internal hardness of the maraging steel is 570 HV or less by Vickers hardness.

2. The maraging steel according to claim 1, wherein the Al content is 0.7 to 1.2% by mass%.

## Patentansprüche

1. Martensitaushärtender Stahl, der einer Nitrierungsbehandlung unterzogen wurde, wobei der martensitaushärtende Stahl besteht aus
• C: 0,008 Masse-% oder weniger,
• Si: 0,5 Masse-% oder weniger,
• Mn: 0,5 Masse-% oder wenige
• Cr: 0,5 bis 1,5 Masse-%,
• Ni: 16,0 bis 22,0 Masse-%,
• Co: 3,0 bis 7,0 Masse-%,
• Mo: 3,0 bis 7,0 Masse-%,
• Al: 0,6 bis 1,3 Masse-%,
• wahlweise 0,0001 bis 0,0030 Masse-% Mg,
• wahlweise 0,0001 bis 0,0030 Masse-% Ca,
• wahlweise 0,0001 bis 0,0030 Masse-% B,
und
die Form eines Bandstahls einer Dicke von 0,5 mm oder weniger besitzt,
wobei
der Rest aus Fe und Verunreinigungen besteht,
die Verunreinigungen begrenzt sind auf
• Ti: 0,01 Masse-% oder weniger,
• Nb: 0,01 Masse-% oder weniger,
• Ta: 0,01 Masse-% oder weniger, und
• W: 0,01 Masse-% oder weniger,
• P: 0,05 Masse-% oder weniger,
• S: 0,05 Masse-% oder weniger,
• N: 0,005 Masse-% oder weniger,
• O: 0,003 Masse-% oder weniger,
wobei das Verhältnis von Al zu Ti der Bedingung Al/Ti ≥ 250 genügt und die Oberflächenhärte des martensitaushärtenden Stahls 800 bis 1050 HV beträgt
und
die innere Härte des martensitaushärtenden Stahls 570 HV oder weniger beträgt, jeweils ausgedrückt als Vickers-Härte.

2. Martensitaushärtender Stahl nach Anspruch 1, bei dem der Al-Gehalt 0,7 bis 1,2 Masse-% beträgt.

## Revendications

1. Acier maraging soumis à un traitement de nitruration, l'acier maraging consistant en
• 0,008 % ou moins de C,
• 0,5 % ou moins de Si,
• 0,5 % ou moins de Mn,
• 0,5 à 1,5 % de Cr,
• 16,0 à 22,0 % de Ni,
• 3,0 à 7,0 % de Co,
• 3,0 à 7,0 % de Mo,
• 0,6 à 1,3 % d'Al,
• facultativement de 0,0001 à 0,0030 % de Mg,
• facultativement de 0,0001 à 0,0030 % de Ca,
• facultativement de 0,0001 à 0,0030 % de B,
en % massique et
ayant la forme d'une bande d'acier d'une épaisseur de 0,5 mm ou moins, dans lequel
le reste consiste en du Fe et des impuretés,
les impuretés sont restreintes à
• 0,01 % ou moins de Ti,
• 0,01 % ou moins de Nb,
• 0,01 % ou moins de Ta, et
• 0,01 % ou moins de W,
• 0,05 % ou moins de P,
• 0,05 % ou moins de S,
• 0,005 % ou moins de N,
• 0,003 % ou moins de O,
dans lequel un rapport Al sur Ti satisfait Al/Ti ≥ 250, et
une dureté de surface de l'acier maraging est de 800 à 1 050 HV et
une dureté interne de l'acier maraging est de 570 HV ou moins en termes de dureté Vickers.

2. Acier maraging selon la revendication 1, dans lequel la teneur en Al est de 0,7 à 1,2 % en % massique.
